# EUROPEAN PATENT SPECIFICATION

(11) **EP 2 699 041 B1**
(45) Date of publication and mention of the grant of the patent: **01.08.2018**
(21) Application number: 12786602.8
(22) Date of filing: 11.05.2012
(51) Int. Cl.: H04W 48/08, H04W 88/16

(54) **EQUIPMENT TRIGGERING METHOD AND NETWORK ELEMENT EQUIPMENT**
GERÄTEAUSLÖSUNGSVERFAHREN UND NETZWERKELEMENTAUSRÜSTUNG
PROCÉDÉ DE DÉCLENCHEMENT D'ÉQUIPEMENT ET ÉQUIPEMENT D'ÉLÉMENT DE RÉSEAU

(30) Priority: 13.05.2011 CN 201110123607
(43) Date of publication of application: 19.02.2014
(73) Proprietor: Huawei Device Co., Ltd., Longgang District Shenzhen Guangdong 518129 (CN)
(72) Inventor: LI, Xiaojuan, Shenzhen Guangdong 518129 (CN)
(74) Representative: Gill Jennings & Every LLP
(86) International application number: PCT/CN2012/075334
(87) International publication number: WO 2012/155808

(56) References cited:
- WO-A1-2011/006437
- CN-A- 1 780 474
- CN-A- 101 959 133
- CN-A- 101 959 133
- CN-A- 102 045 897
- CN-A- 102 056 265
- INTERDIGITAL COMMUNICATIONS: "A method to trigger detached devices via HSS and NAS signalling", 3GPP DRAFT; S2-112561_DETACHED_TRIGGERING_VIA_HSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 11 May 2011 (2011-05-11), XP050525540, [retrieved on 2011-05-11]

## Description

### TECHNICAL FIELD

The present invention relates to the field of communications technologies, and in particular, to a device triggering method and a network element device.

### BACKGROUND

Existing means of communication mainly include two communication models: human to human (H2H, Human to Human) and machine to machine (M2M, Machine to Machine).

An H2H application mainly refers to communications in which humans are communication objects, such as telephone communications; but an M2M application is also called a machine type communications (MTC, Machine Type Communications) application and refers to network communications between multiple network elements without involvement of humans, for example, traffic control and management, remote meter reading, remote monitoring, mobile payment, positioning and tracking, medical monitoring, and another application. M2M technologies combine communications and network technologies and may connect machines and devices spread all over people's daily life to form a network, so that the devices become more "intelligent", and therefore rich applications may be created, thereby incurring a new round of changes to ways of daily life, industrial production, and the like. In various future M2M applications, in order to better enable a network side to manage a device, the industry proposes a feature of M2M device triggering: When an M2M application server requires an M2M device to communicate with the M2M application server, the M2M device is required to be triggered first before the M2M device performs data exchange with the M2M application server through a network.

In an existing triggering mechanism of an M2M device or of an H2H device, a device first actively sends non-access stratum (NAS, Non-Access Stratum) signaling such as an attach request or a tracking area update request, and after receiving the NAS signaling sent by the device, a core network makes a device application trigger request be carried in a response corresponding to the NAS signaling and sent to the device to complete triggering of the device.

INTERDIGITAL COMMUNICATIONS: "A method to trigger detached devices via HSS and NAS signalling", 3GPP Draft; S2-112561_Detached_Triggering_via_HSS, 3rd Generation Partnership Project (3GPP), Mobile Competence Centre; 650, Route des Lucioles; F-06921 Sophia-Antipolis Cedex, France, vol. SA WG2, no Xi' An; 20110516, 11 May 2011 (2011-05-11), discloses a method to trigger detached devices via HSS and NAS signaling. WO2011/006437A1 discloses another method for triggering detached devices.

Embodiments of the present invention provide a device triggering method and a network element device, so as to improve initiative and real-timeness in triggering an M2M device or an H2H device.

In order to solve the technical problem, an embodiment of the present invention provides the following technical solution:

A device triggering method in a long term evolution, LTE, network includes:
receiving, from a home location server, by a mobility management network element, a device application trigger request for triggering a device to communicate with the home location server, wherein the device application trigger request comprises a device identifier; and
determining, by the mobility management network element, whether a device corresponding to the device identifier has completed detaching;
characterized in that:
   if the result of the determination is no, sending, by the mobility management network element, a request carrying the device application trigger request to an access network element to instruct the access network element to deliver the device application trigger request to the device, so as to trigger the device;
   if the result of the determination is yes, sending, by the mobility management network element, a message indicating a failure in the triggering the device to the home location server.

A mobility management network element in a long term evolution, LTE, network includes:
a receiving module, configured to receive, from a home location server, a device application trigger request for triggering a device to communicate with the home location server;
a first sending module, configured to send a request carrying the device application trigger request to an access network element to make the access network element trigger a device,
wherein the device application trigger request comprises a device identifier; and
the management network element is configured to perform the following:
   receiving a device application trigger request; and
   determining whether a device corresponding to the device identifier has completed detaching;
   characterized in that:
      if the result of the determination is no, sending a request carrying the device application trigger request to an access network element to instruct the access network element to deliver the device application trigger request to the device, so as to trigger the device;
      if the result of the determination is yes, sending a message indicating a failure in the triggering the device to the home location server.

It can be seen from the above that, in the embodiment of the present invention, after receiving a device application trigger request, a mobility management network element delivers the device application trigger request to an access network element or a gateway network element through an actively originated request, so as to enable the access network element or the gateway network element to deliver the device application trigger request to a corresponding device to trigger the device. The mechanism relatively improves initiative and real-timeness of a network in delivering the device application trigger request, thereby triggering an M2M device or an H2H device in a more timely and efficient manner to exchange data with an application server.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flow chart of a device triggering method according to an embodiment of the present invention;
FIG. 2 is a schematic flow chart of another device triggering method according to an embodiment of the present invention;
FIG. 3 is a schematic flow chart of still another device triggering method according to an embodiment of the present invention;
FIG. 4 is a schematic flow chart of still another device triggering method according to an embodiment of the present invention;
FIG 5 is a schematic flow chart of still another device triggering method according to an embodiment of the present invention;
FIG 6 is a schematic flow chart of still another device triggering method according to an embodiment of the present invention;
FIG. 7-a is a schematic structural diagram of a mobility management network element according to an embodiment of the present invention;

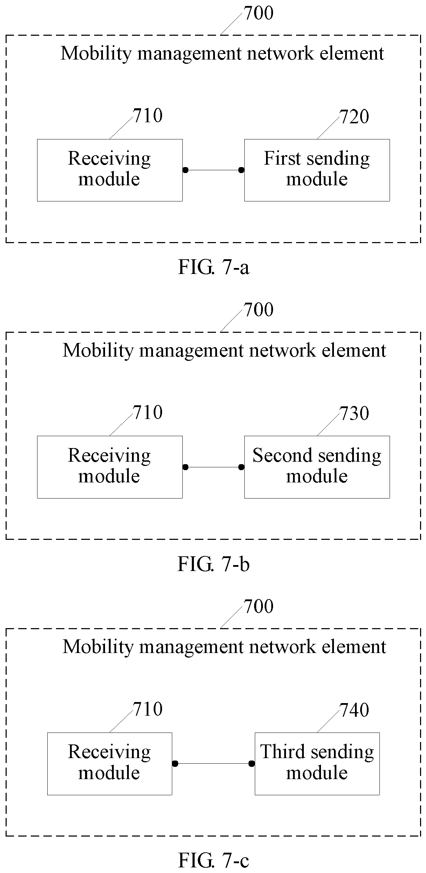

FIG 7-b is a schematic structural diagram of another mobility management network element according to an embodiment of the present invention;
FIG 7-c is a schematic structural diagram of still another mobility management network element according to an embodiment of the present invention;

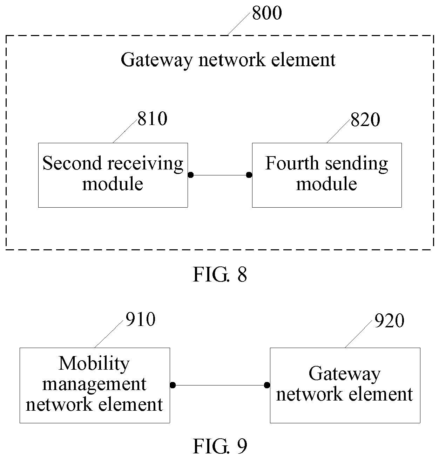

FIG 8 is a schematic structural diagram of a gateway network element according to an embodiment of the present invention; and
FIG. 9 is a schematic diagram of a communication system according to an embodiment another network.

For example, a mobility management network element mentioned in embodiments of the present invention may refer to a mobility management entity MME connected to an E-UTRAN and a serving general packet radio service support node (SGSN, Serving GPRS (General Packet Radio Service) Support Node) connected to a UTRAN/GERAN; or an access gateway (AGW, Access Gateway) in a non-3GPP network, an entity ePDG having a mobility management logical function in a WLAN, an access service network gateway (ASN GW, Access Service Network Gateway) in a worldwide interoperability for microwave access WiMAX network, or an entity having a high rate packet data access network HRPD-AN mobility management logical function in a CDMA network, or an entity implementing a user equipment mobility management logical function in another network.

A home location server mentioned in embodiments of the present invention refers to (HLR, Home Location Register), (HSS, Home Subscriber Server), or the like.

A device mentioned in embodiments of the present invention refers to an H2H device or an M2M device, and the solution of the embodiments of the present invention is used to trigger an H2H device or an M2M device.

Detailed illustration is provided below through specific embodiments.

An embodiment of a device triggering method of the present invention may include: receiving, by a mobility management network element, a device application trigger request from a home location server; sending a request (for example, a control plane request) carrying the device application trigger request to a device (for example, an H2H device or an M2M device), so as to trigger the device; or, sending a request (for example, a control plane request) carrying the device application trigger request to an access network element, so that the access network element triggers the device; or, sending a request (for example, a control plane request) message carrying the device application trigger request to a gateway network element, so that the gateway network element triggers the device.

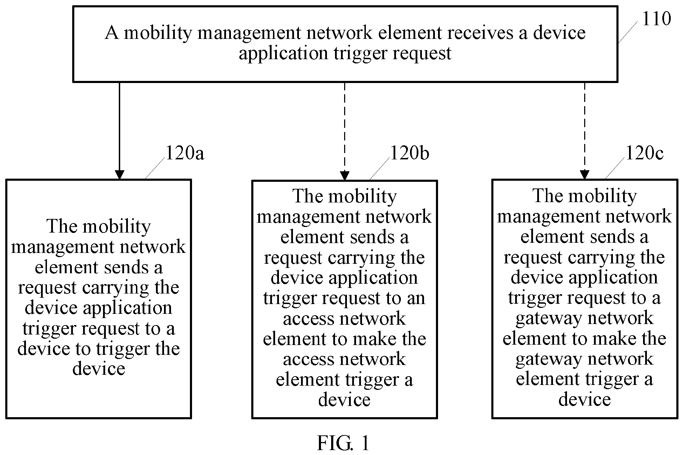

Referring to FIG. 1, specific steps may include:
110. A mobility management network element receives a device application trigger request.

In an application scenario, if an application server (Application Server) needs to trigger a certain M2M device or a certain H2H device to communicate with the application server (for example, the Application Server needs a certain M2M device to report a certain type of data to the application server), the Application Server may send a device application trigger request (UE application trigger request) to a home location server, and the UE application trigger request carries a device identifier of the M2M device or the H2H device that needs to be triggered.

In addition, the Application Server may send a high priority processing instruction (the high priority processing instruction may be included in the UE application trigger request or may be not included in the UE application trigger request) to the home location server at the same time when sending the UE application trigger request to the home location server, so as to instruct a device, which receives the UE application trigger request, to process the UE application trigger request in a timely manner.

After receiving the UE application trigger request sent by the Application Server, the home location server may store the UE application trigger request, and make the UE application trigger request be carried in an Insert Subscriber Data Request (Insert Subscriber Data Request), a Cancel Location request, or another request or message and sent to the mobility management network element. In addition, the home location server may further make the message, which is sent to the mobility management network element and carries the UE application trigger request, carry a high priority processing instruction (if the UE application trigger request sent by the Application Server to the home location server includes a high priority processing instruction, the home location server may make the UE application trigger request that includes the high priority processing instruction be carried in a certain message and sent to the mobility management network element; and if the UE application trigger request sent by the Application Server to the home location server does not include a high priority processing instruction, the home location server may insert a high priority processing instruction into the message that is sent to the mobility management network element and carries the UE application trigger request), so as to instruct the device, which receives the UE application trigger request, to process the UE application trigger request in a timely manner.

Execute step 120a, 120b, or 120c.

120a. The mobility management network element sends a request (for example, a control plane request) carrying the device application trigger request to a device to trigger the device.

It should be noted that the control plane request refers to a control plane request (that is, a request originated by a control plane) actively initiated by a local end (the local end herein refers to the mobility management network element), but is not a response to a request from another device.

The mobility management network element, for example, may send a Paging request or a Detach request, which carries the device application trigger request, to a device (for example, an H2H device or an M2M device) to trigger the device (herein, the function of sending, by the mobility management network element, the Detach request is not to instruct the device to detach, and therefore, after receiving the Detach request, the device may obtain the UE application trigger request from the Detach request, but does not execute detaching), or the mobility management network element may send another control plane request carrying the UE application trigger request to an M2M device or an H2H device to trigger the device.

For example, the mobility management network element may make the UE application trigger request be carried in a non Critical Extension field or another field of the Paging request, the device may correspondingly obtain the UE application trigger request from the non Critical Extension field or the another field of the Paging request, and the device may perform data exchange with the Application Server accordingly.

It can be seen that after the mobility management network element receives the UE application trigger request, if the mobility management network element delivers the UE application trigger request to the device through the actively originated control plane request, initiative of the mobility management network element in delivering the UE application trigger request is improved, thereby ensuring that the UE application trigger request reaches, for example, an H2H device or an M2M device in real time.

120b. The mobility management network element sends a request carrying the device application trigger request to an access network element to make the access network element trigger a device.

The mobility management network element, for example, may send a radio access bearer setup request, a radio access bearer modification request, a radio access bearer release request, or another control plane request, which carries the UE application trigger request, to the access network element. The access network element may correspondingly obtain the UE application trigger request from the request.

For example, the mobility management network element may make the received UE application trigger request be carried in an evolved packet system-protocol data unit (EPS-PDU, Evolved Packet System-Protocol Data Unit) or another field of a radio access bearer setup request, a radio access bearer modification request, or a radio access bearer release request, and after the access network element receives the radio access bearer setup request, the radio access bearer modification request, or the radio access bearer release request, the access network element may obtain the UE application trigger request from the evolved packet system-protocol data unit (EPS-PDU) or the another field of the message.

Further, the mobility management network element, for example, may further make a high priority processing instruction be carried in the request carrying the UE application trigger request, so as to instruct the access network element, which receives the request, to deliver the UE application trigger request to a corresponding device, such as an H2H device or an M2M device, in a timely manner to trigger the device.

Further, the access network element, for example, may send an RRC (RRC, Radio Connection Reconfiguration) request (for example, the UE application trigger request may be carried in a critical Extensions Future field or another field of the RRC request) or another message, which carries the UE application trigger request, to the corresponding device, such as the H2H device or the M2M device, and after receiving the RRC request or the another request or message, the device such as the H2H device or the M2M device may obtain the UE application trigger request from the critical Extensions Future field or the another field of the request or message, establish a communication channel with the Application Server accordingly, and perform data exchange.

It can be seen that after the mobility management network element receives the UE application trigger request, if the mobility management network element delivers the UE application trigger request to the access network element through the actively originated control plane request, the access network element is enabled to deliver the UE application trigger request to, for example, the H2H device or the M2M device in a timely manner to trigger the device, initiative of a network in delivering the UE application trigger request is improved, thereby ensuring that the UE application trigger request reaches the H2H device or the M2M device in real time.

120c. The mobility management network element sends a request carrying the device application trigger request to a gateway network element to make the gateway network element trigger a device.

For example, the mobility management network element may send a Modify Bearer Request or a Create Bearer Request, which carries the device application trigger request, to the gateway network element to make the gateway network element trigger the device (herein, the function of sending, by the mobility management network element, the Modify Bearer Request or the Create Bearer Request is not necessarily to instruct the gateway network element to modify a bearer or create a bearer, and therefore, after receiving the Modify Bearer Request or the Create Bearer Request, the gateway network element may obtain the UE application trigger request therefrom, but may not execute a bearer modification or bearer creation operation), or the mobility management network element may send another control plane request carrying the device application trigger request to the gateway network element to make the gateway network element trigger the device. The gateway network element may correspondingly obtain the UE application trigger request from the request.

For example, the mobility management network element may make the UE application trigger request be carried in a Protocol Configuration Option field or another field of the Modify Bearer Request or the Create Bearer Request, and after receiving the Modify Bearer Request or the Create Bearer Request, the gateway network element may obtain the UE application trigger request from the Protocol Configuration Option field or the another field of the request.

Further, the mobility management network element, for example, may further make a high priority processing instruction be carried in the request, which is sent to the gateway network element and carries the device application trigger request, to instruct the gateway network element, which receives the request message, to deliver the UE application trigger request to a corresponding device, such as an H2H device or an M2M device, in a timely manner through a user plane data packet, so as to trigger the device.

In addition, the gateway network element, for example, may send a downlink data packet or another user plane data packet, which carries the UE application trigger request, to a corresponding M2M device, and after receiving the downlink data packet or the another user plane data packet, the device may obtain the UE application trigger request from the data packet, establish a communication channel with the Application Server accordingly, and perform data exchange.

In an actual application, after the receiving the device application trigger request, the method may further include: determining, by the mobility management network element, whether a device corresponding to the device identifier already detaches; if no, sending a request carrying the device application trigger request to the device to trigger the device; or, sending a request carrying the device application trigger request to an access network element to make the access network element trigger the device; or, sending a request carrying the device application trigger request to a gateway network element to make the gateway network element trigger the device; if yes, sending a message indicating a failure in triggering the device to the home location server. Certainly, the mobility management network element may also take it by default that the device does not detach, and therefore send a request carrying the device application trigger request to the device to trigger the device; or, send a request carrying the device application trigger request to an access network element to make the access network element trigger the device; or send a request carrying the device application trigger request to a gateway network element to make the gateway network element trigger the device, but do not execute the step of determining whether the device corresponding to the device identifier already detaches.

It can be seen that after the mobility management network element receives the UE application trigger request, if the mobility management network element delivers the UE application trigger request to a gateway network element through an actively originated control plane request, the gateway network element is enabled to deliver the UE application trigger request to a device, such as an H2H device or an M2M device, in a timely manner through a user plane data packet to trigger the device, initiative of a network in delivering the UE application trigger request is improved, thereby ensuring that the UE application trigger request reaches in real time the device to be triggered.

Description is provided below from the perspective of a gateway network element.

Another embodiment of a device triggering method according to the embodiment of the present invention includes: receiving, by a gateway network element, a request that is from a mobility management network element and carries a device application trigger request; and sending a data packet (for example, a downlink data packet) carrying the device application trigger request to a device.

The mobility management network element, for example, may send a Modify Bearer Request or a Create Bearer Request, which carries the device application trigger request, to the gateway network element to make the gateway network element trigger the device (herein, the function of sending, by the mobility management network element, the Modify Bearer Request or the Create Bearer Request is not necessarily to instruct the gateway network element to modify a bearer or create a bearer, and therefore, after receiving the Modify Bearer Request or the Create Bearer Request, the gateway network element may obtain the UE application trigger request therefrom, but may not execute a bearer modification or bearer creation operation), or the mobility management network element may send another control plane request carrying the device application trigger request to the gateway network element to make the gateway network element trigger the device. The gateway network element may correspondingly obtain the UE application trigger request from the request message.

For example, the mobility management network element may make the UE application trigger request be carried in a Protocol Configuration Option field or another field of the Modify Bearer Request or the Create Bearer Request, and after receiving the Modify Bearer Request or the Create Bearer Request, the gateway network element may obtain the UE application trigger request from the Protocol Configuration Option field or the another field of the request message.

Further, the mobility management network element, for example, may further make a high priority processing instruction be carried in the request, which is sent to the gateway network element and carries the device application trigger request, to instruct the gateway network element, which receives the request message, to deliver the UE application trigger request to a corresponding device, such as an H2H device or an M2M device, in a timely manner through a user plane data packet, so as to trigger the device.

In addition, the gateway network element, for example, may send a downlink data packet or another user plane data packet, which carries the UE application trigger request, to a corresponding device, and after receiving the downlink data packet or the another user plane data packet, the H2H device or the M2M device may obtain the UE application trigger request from the data packet, establish a communication channel with the Application Server accordingly, and perform data exchange.

It can be seen from the above that, in this embodiment, after receiving the device application trigger request, the mobility management network element delivers the device application trigger request to the device through an actively originated request, or delivers the device application trigger request to an access network element or a gateway network element through an actively originated request, so as to enable the access network element or the gateway network element to deliver the device application trigger request to the corresponding device to trigger the device. The mechanism improves initiative and real-timeness of a network in delivering the device application trigger request, thereby triggering a device, such as an M2M device or an H2H device in a more timely and efficient manner, to exchange data with an application server.

To make the technical solutions of the embodiment of the present invention better understood and implemented, the following provides illustration by using an example of an application scenario where an M2M device is triggered in a Long Term Evolution (LTE, Long Term Evolution) system. An application scenario of triggering an H2H device may be derived accordingly.

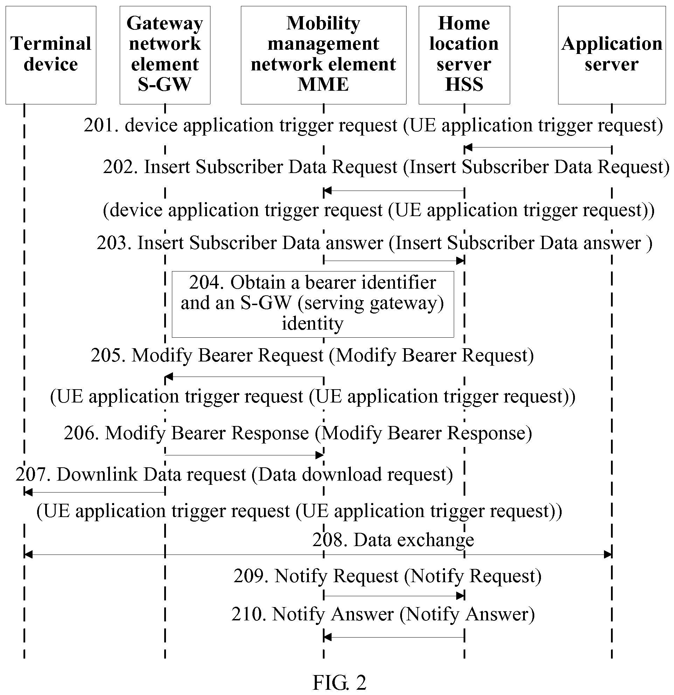

Referring to FIG. 2, specific steps may include:
201. An Application Server sends a UE application trigger request to an HSS.

In an actual application, the Application Server may directly send the UE application trigger request to the HSS, or make the UE application trigger request be carried in a certain request or a certain message and sent to the HSS. The UE application trigger request may carry a device identifier of an M2M device that needs to be triggered.

In addition, the Application Server may send a high priority processing instruction (the high priority processing instruction may be included in the UE application trigger request or may be not included in the UE application trigger request) to the HSS at the same time when sending the UE application trigger request to the HSS, so as to instruct a device, which receives the UE application trigger request, to process the UE application trigger request in a timely manner.

202. The HSS receives and stores the UE application trigger request.

The HSS sends the UE application trigger request to an MME.

In an actual application, the HSS, for example, may make the UE application trigger request be carried in an Insert Subscriber Data Request (Insert Subscriber Data Request), a Cancel Location (Cancel Location) request, or another message and sent to the MME. FIG. 2 shows an example where the HSS makes the UE application trigger request be carried in the Insert Subscriber Data Request and sent to the MME.

In addition, the HSS may further make a high priority processing instruction be carried in the message that is sent to the MME and carries the UE application trigger request, so as to instruct a device, which receives the UE application trigger request, to process the UE application trigger request in a timely manner.

203. The MME receives the UE application trigger request from the HSS.

The MME, for example, may receive the Insert Subscriber Data Request, the Cancel Location request, or another message, where the Insert Subscriber Data Request, the Cancel Location request, or the another message is from the HSS and carries the UE application trigger request, and obtain the UE application trigger request therein from the HSS.

The MME may send an Insert Subscriber Data answer (Insert Subscriber Data answer), a Cancel Location ACK response, or another corresponding response to the HSS, and FIG. 2 shows an example where the MME sends the Insert Subscriber Data answer to the HSS.

204. The MME obtains a default bearer identity (default bearer identity) or a dedicated bearer identity (dedicated bearer identity), where the default bearer identity or the dedicated bearer identity is corresponding to an M2M device, and an S-GW identity, so as to subsequently send the UE application trigger request to an S-GW through a Modify Bearer Request (Modify Bearer Request) or a Create Bearer Request (Create Bearer Request), so that the S-GW may send the UE application trigger request to the M2M device through a user plane bearer.

205. The MME sends a Modify Bearer Request or a Create Bearer Request to the S-GW.

The Modify Bearer Request or the Create Bearer Request sent by the MME to the S-GW, carries the UE application trigger request, and further carries the default bearer identity or the dedicated bearer identity.

In an actual application, the UE application trigger request, for example, may be carried in a Protocol Configuration Option field (Protocol Configuration Option) in the Create Bearer Request or the Modify Bearer Request, and certainly may be carried in another field.

FIG. 2 shows an example where the MME sends the Modify Bearer Request to the S-GW.

206. After receiving the Modify Bearer Request or the Create Bearer Request, the S-GW determines that the UE application trigger request needs to be sent to the M2M device through a corresponding default bearer (default bearer) or dedicated bearer (dedicated bearer).

It should be understood that the function of sending, by the MME, the Modify Bearer Request or the Create Bearer Request is not necessarily to instruct the S-GW to modify a bearer or create a bearer, and therefore after receiving the Modify Bearer Request or the Create Bearer Request, the S-GW may obtain the UE application trigger request therein, but does not execute a bearer modification or bearer creation operation.

The S-GW sends a Modify Bearer Response (Modify Bearer Response) or a Create Bearer Response (Create Bearer Response) to the MME.

FIG. 2 shows an example where the S-GW sends the Modify Bearer Response to the MME.

207. The S-GW sends a Downlink Data (Downlink Data) to the M2M device, where the Downlink Data carries the UE application trigger request.

208. The M2M device establishes a communication channel to the Application Server, and the Application Server and the M2M device perform data exchange.

209. After the M2M device and the Application Server initiate communication, the MME may delete the UE application trigger request stored by the MME, and may send a Notify Request (Notify Request) to the HSS, where the Notify Request may carry an ACK of UE application trigger request, to indicate that the UE application trigger request is already successfully sent to the M2M device.

210. The HSS sends a Notify Answer (Notify Answer) to the MME, and may delete the UE application trigger request stored by the HSS.

It can be seen from the above that, in this embodiment, after receiving the UE application trigger request sent by the HSS, the MME delivers the UE application trigger request to the gateway network element through an actively originated control plane request, and the gateway network element delivers the UE application trigger request to the corresponding device through a user plane data packet. The mechanism improves initiative and real-timeness of a network in delivering the UE application trigger request, thereby making a device exchange data with an application server in a more timely and efficient manner.

To make the technical solutions of the embodiment of the present invention be better understood and implemented, the following provides illustration by using an example of another application scenario where an M2M device is triggered in an LTE system. An application scenario of triggering an H2H device may be derived accordingly.

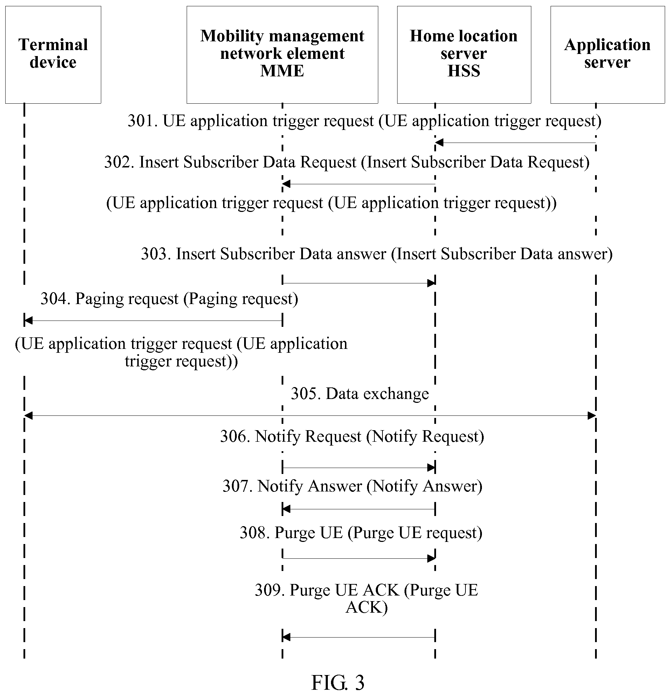

Referring to FIG. 3, specific steps may include:
301. An Application Server sends a UE application trigger request to an HSS.

In an actual application, the Application Server may directly send the UE application trigger request to the HSS, or make the UE application trigger request be carried in a certain message and sent to the HSS. The UE application trigger request may carry a device identifier of an M2M device that needs to be triggered.

In addition, the Application Server may further send a high priority processing instruction to the HSS at the same time when sending the UE application trigger request to the HSS, so as to instruct a device, which receives the UE application trigger request, to process the UE application trigger request in a timely manner.

302. The HSS receives and stores the UE application trigger request.

The HSS sends the UE application trigger request to an MME.

In an actual application, the HSS, for example, may make the UE application trigger request be carried in an Insert Subscriber Data Request (Insert Subscriber Data Request), a Cancel Location request, or another message and sent to the MME. FIG. 3 shows an example where the HSS makes the UE application trigger request be carried in the Insert Subscriber Data Request and sent to the MME.

In addition, the HSS may further make a high priority processing instruction be carried in the message that is sent to the MME and carries the UE application trigger request, so as to instruct a device, which receives the UE application trigger request, to process the UE application trigger request in a timely manner.

303. The MME receives the UE application trigger request from the HSS.

The MME, for example, may receive the Insert Subscriber Data Request, the Cancel Location request, or another message, where the Insert Subscriber Data Request, the Cancel Location request, or the another message is from the HSS and carries the UE application trigger request, and obtain the UE application trigger request therein from the HSS.

The MME may send an Insert Subscriber Data answer (Insert Subscriber Data answer), a Cancel Location ACK response, or another corresponding response to the HSS, and FIG. 3 shows an example where the MME sends the Insert Subscriber Data answer to the HSS.

304. The MME may determine, according to the high priority processing instruction, that a Paging (Paging) request needs to be actively sent to the M2M device, and make the UE application trigger request be carried in the Paging request.

The UE application trigger request, for example, may be carried in a non Critical Extension field (non Critical Extension) or another field of the Paging request.

It can be understood that FIG. 3 shows an example where the MME actively delivers the UE application trigger request to the M2M device through the Paging request, and certainly the MME may also actively deliver the UE application trigger request to the M2M device through a Detach (Detach) request or another control plane request. If the MME may actively deliver the UE application trigger request to the M2M device through a Detach request message, the M2M device needs to return a Detach Reject response to the MME. Herein, the function of sending, by the MME, the Detach request is not to instruct the device to detach, and therefore, after receiving the Detach request, the M2M device may obtain the UE application trigger request therein, but do not execute detaching.

305. The M2M device establishes a communication channel to the Application Server, and the Application Server and the M2M device perform data exchange.

306. After the M2M device and the Application Server initiate communication, the MME may delete the UE application trigger request stored by the MME, and may send a Notify Request (Notify Request) to the HSS, where the Notify Request may carry an ACK of UE application trigger request, to indicate that the UE application trigger request is already successfully sent to the M2M device.

307. The HSS sends a Notify Answer (Notify Answer) to the MME.

308. The MME sends a Purge UE (Purge UE) request to the HSS, where the Purge UE request carries an instruction of deleting the UE application trigger request.

309. The HSS deletes the UE application trigger request stored by the HSS, and may send a Purge UE ACK (Purge UE ACK) to the MME.

It can be seen from the above that, in this embodiment, after receiving the UE application trigger request, the MME delivers the UE application trigger request to the device through an actively originated control plane request. The mechanism improves initiative and real-timeness of a network in delivering the UE application trigger request, thereby making a device exchange data with an Application Server in a more timely and efficient manner.

To make the technical solutions of the embodiment of the present invention be better understood and implemented, the following provides illustration by using an example of another application scenario where an M2M device is triggered in an LTE system. An application scenario of triggering an H2H device may be derived accordingly.

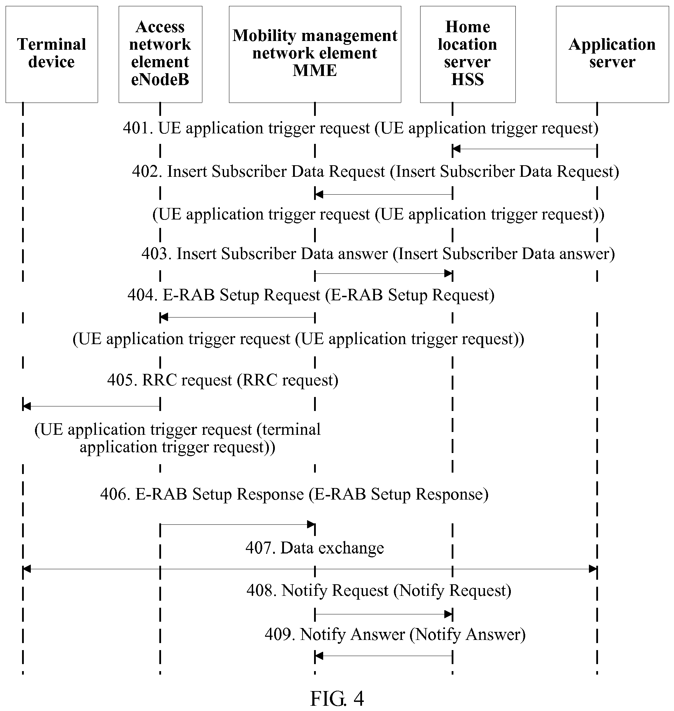

Referring to FIG. 4, specific steps may include:
401. An Application Server sends a UE application trigger request to an HSS.

In an actual application, the Application Server may directly send the UE application trigger request to the HSS, or make the UE application trigger request be carried in a certain message and sent to the HSS. The UE application trigger request may carry a device identifier of an M2M device that needs to be triggered.

In addition, the Application Server may further send a high priority processing instruction to the HSS at the same time when sending the UE application trigger request to the HSS, so as to instruct a device, which receives the UE application trigger request, to process the UE application trigger request in a timely manner.

402. The HSS receives and stores the UE application trigger request.

The HSS sends the UE application trigger request to an MME.

In an actual application, the HSS, for example, may make the UE application trigger request be carried in an Insert Subscriber Data Request (Insert Subscriber Data Request), a Cancel Location request, or another message and sent to the MME. FIG. 4 shows an example where the HSS makes the UE application trigger request be carried in the Insert Subscriber Data Request and sent to the MME.

In addition, the HSS may further make a high priority processing instruction be carried in the request or the message, where the request or the message is sent to the MME and carries the UE application trigger request, so as to instruct a device, which receives the UE application trigger request, to process the UE application trigger request in a timely manner.

403. The MME receives the UE application trigger request from the HSS.

The MME, for example, may receive the Insert Subscriber Data Request, the Cancel Location request, or another message, where the Insert Subscriber Data Request, the Cancel Location request, or the another message is from the HSS and carries the UE application trigger request, and obtain the UE application trigger request therein from the HSS.

The MME may send an Insert Subscriber Data answer (Insert Subscriber Data answer), a Cancel Location ACK response, or another corresponding response to the HSS, and FIG. 4 shows an example where the MME sends the Insert Subscriber Data answer to the HSS.

404. The MME may determine, according to the UE application trigger request and the high priority processing instruction, that an E-RAB Setup Request (E-RAB Setup Request) needs to be sent to an eNodeB, so as to deliver the UE application trigger request to the device at the same time when establishing a radio resource link.

It should be understood that FIG. 4 shows an example where the MME actively delivers the UE application trigger request to the eNodeB through the E-RAB Setup Request, and certainly the MME may also actively deliver the UE application trigger request to the eNodeB through an E-RAB Modify Request (E-RAB Modify Request), an E-RAB Release Request (E-RAB Release Request), or another control plane request.

The UE application trigger request, for example, may be in an enhanced packet system-protocol data unit (EPS-PDU) or another field of an E-RAB Setup Request, the E-RAB Modify Request, or the E-RAB Release Request.

405. The eNodeB sends an RRC (RRC, Radio Connection Reconfiguration) request to the M2M device, where the RRC request carries the UE application trigger request.

The UE application trigger request, for example, may be in a critical Extensions Future field (critical Extensions Future) or another field of the RRC request.

The M2M device receives the RRC request, and establishes an RRC link, and after establishing an RRC, the M2M device may return a corresponding response to the eNodeB.

406. The eNodeB returns an E-RAB Setup Response (S1-AP:E-RAB Setup Response) to the MME.

407. The M2M device and the Application Server establish a communication channel, and the Application Server and the M2M device perform data exchange.

Because the M2M device already establishes the radio resource link with the eNodeB, at this time, only a communication channel of another band needs to be established between the M2M device and the Application Server.

408. After the M2M device and the Application Server perform communication, the MME may delete the UE application trigger request stored by the MME, and may send a Notify Request (Notify Request) to the HSS, where the Notify Request may carry an ACK of UE application trigger request, to indicate that the UE application trigger request is already successfully sent to the M2M device.

409. The HSS sends a Notify Answer (Notify Answer) to the MME, and may delete the UE application trigger request stored by the HSS.

It can be seen from the above that, in this embodiment, after receiving the UE application trigger request sent by the HSS, the MME delivers the UE application trigger request to the access network element through an actively originated control plane request, and the access network element delivers the UE application trigger request to the corresponding device through a user plane data packet. The mechanism improves initiative and real-timeness of a network in delivering the UE application trigger request, thereby making a device exchange data with an application server in a more timely and efficient manner.

To make the technical solutions of the embodiment of the present invention be better understood and implemented, the following provides illustration by using an example of an application scenario where an M2M device fails to be triggered in an LTE system. An application scenario of failed triggering of an H2H device may be derived accordingly.

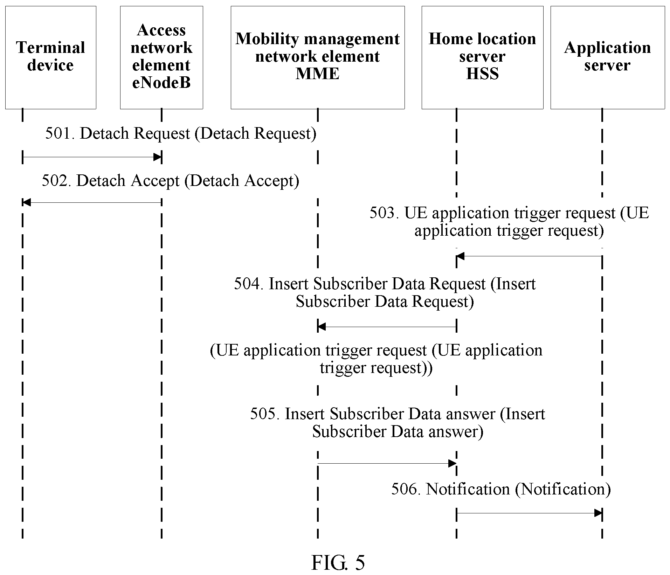

Referring to FIG. 5, specific steps may include:
501-502. An M2M device completes detaching.
503. An Application Server sends a UE application trigger request to an HSS.

In an actual application, the Application Server may directly send the UE application trigger request to the HSS, or make the UE application trigger request be carried in a certain message and sent to the HSS. The UE application trigger request may carry a device identifier of an M2M device that needs to be triggered.

In addition, the Application Server may further send a high priority processing instruction to the HSS at the same time when sending the UE application trigger request to the HSS, so as to instruct a device, which receives the UE application trigger request, to process the UE application trigger request in a timely manner.

504. The HSS receives and stores the UE application trigger request.

The HSS sends the UE application trigger request to an MME.

In an actual application, the HSS, for example, may make the UE application trigger request be carried in an Insert Subscriber Data Request (Insert Subscriber Data Request), a Cancel Location request, or another message and sent to the MME. FIG. 5 shows an example where the HSS makes the UE application trigger request be carried in the Insert Subscriber Data Request and sent to the MME.

In addition, the HSS may further make a high priority processing instruction be carried in the message that is sent to the MME and carries the UE application trigger request, so as to instruct a device, which receives the UE application trigger request, to process the UE application trigger request in a timely manner.

505. The MME determines that the M2M device already detaches.

The MME returns an Insert Subscriber Data Answer response to the HSS, where the response carries indication information of a trigger failure, and may further carry a cause of the trigger failure, for example, the M2M device fails and already detaches.

506. The HSS deletes, according to the received Insert Subscriber Data Answer response, the UE application trigger request stored by the HSS.

The HSS sends a Notification request to the Application Server, where the Notification request may carry an indication of a failure in triggering the M2M device, and may further carry a cause of the failure in the triggering, for example, the M2M device fails and already detaches.

It can be seen from the above that, in this embodiment, after the MME receives the UE application trigger request sent by the HSS, if the MME determines that the M2M device already detaches, the MME instructs the HSS to delete the stored UE application trigger request, and the HSS indicates a trigger failure to the Application Server. The mechanism improves initiative and real-timeness of the Application Server in obtaining a trigger result.

To make the technical solutions of the embodiment of the present invention be better understood and implemented, the following provides illustration by using an example of another application scenario where an M2M device fails to be triggered in an LTE system. An application scenario of failed triggering of an H2H device may be derived accordingly.

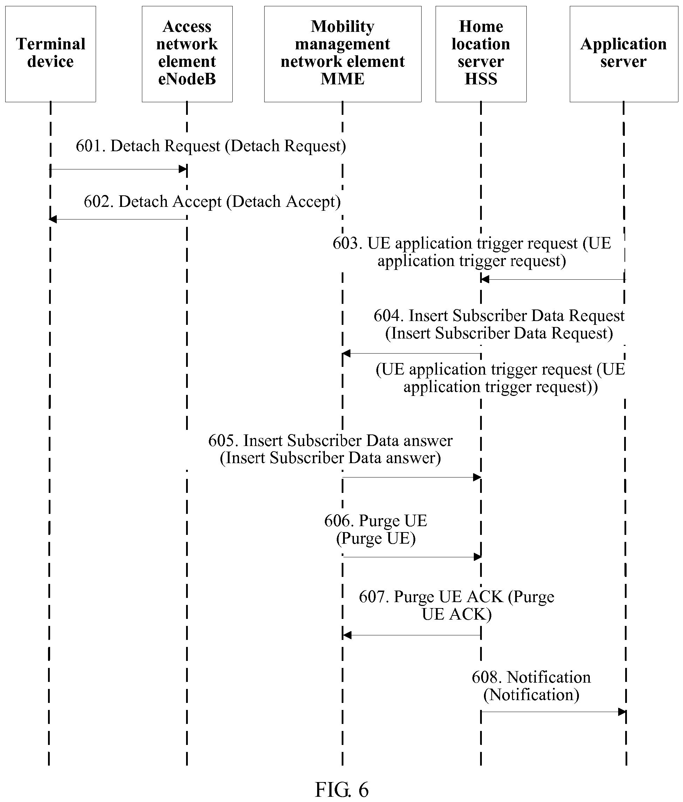

Referring to FIG. 6, specific steps may include:
601-602. An M2M device completes detaching.
603. An Application Server sends a UE application trigger request to an HSS.

In an actual application, the Application Server may directly send the UE application trigger request to the HSS, or make the UE application trigger request be carried in a certain message and sent to the HSS. The UE application trigger request may carry a device identifier of an M2M device that needs to be triggered.

In addition, the Application Server may further send a high priority processing instruction to the HSS at the same time when sending the UE application trigger request to the HSS, so as to instruct a device, which receives the UE application trigger request, to process the UE application trigger request in a timely manner.

604. The HSS receives and stores the UE application trigger request.

The HSS sends the UE application trigger request to an MME.

In an actual application, the HSS, for example, may make the UE application trigger request be carried in an Insert Subscriber Data Request (Insert Subscriber Data Request), a Cancel Location request, or another request or message and sent to the MME. FIG. 6 shows an example where the HSS makes the UE application trigger request be carried in the Insert Subscriber Data Request and sent to the MME.

In addition, the HSS may further make a high priority processing instruction be carried in the message that is sent to the MME and carries the UE application trigger request, so as to instruct a device, which receives the UE application trigger request, to process the UE application trigger request in a timely manner.

605. The MME determines that the M2M device already detaches.

The MME returns an Insert Subscriber Data Answer response to the HSS, where the response carries indication information of a trigger failure, and may further carry a cause of the trigger failure, for example, the M2M device fails and already detaches.

606. The MME sends a Purge UE (Purge UE) request to the HSS, where the Purge UE request carries an instruction of deleting the UE application trigger request.

607. The HSS deletes the UE application trigger request stored by the HSS, and may send a Purge UE ACK (Purge UE ACK) to the MME.

608. The HSS sends a Notification request to the Application Server, where the Notification request may carry an indication of a failure in triggering the M2M device, and may further carry a cause of the failure in the triggering, for example, the M2M device fails and already detaches.

It can be seen from the above that, in this embodiment, after the MME receives the UE application trigger request sent by the HSS, if the MME determines that the M2M device already detaches, the MME instructs the HSS to delete the stored UE application trigger request, and the HSS indicates a trigger failure to the Application Server. The mechanism improves initiative and real-timeness of the Application Server in obtaining a trigger result.

It should be noted that, for the methods according to the embodiments, for purposes of simplicity of explanation, the methods are described as a combination of a series of actions, but it should be clear to persons skilled in the art that the present invention is not limited by the order of the actions, because certain steps can, according to the present invention, be performed in another order or concurrently. In addition, persons skilled in the art should also know that the embodiments described in the specification all fall within exemplary embodiments, and the related actions and modules are not necessarily required by the present invention.

To make the technical solutions of the embodiment of the present invention better implemented, the following provides a related device for implementing the method according to the embodiment.

Referring to FIG. 7-a, FIG. 7-b, and FIG. 7-c, a mobility management network element 700 according to an embodiment of the present invention may include: a receiving module 710 and a first sending module 720, or include the receiving module 710 and a second sending module 730, or include the receiving module 710 and a third sending module 740.

The receiving module 710 is configured to receive a device application trigger request.

The first sending module 720 is configured to send a request carrying the device application trigger request to an access network element to make the access network element trigger a device (for example, an H2H device or an M2M device).

The second sending module 730 is configured to send a request carrying the device application trigger request to a gateway network element to make the gateway network element trigger a device (for example, an H2H device or an M2M device).

The third sending module 740 is configured to send a request carrying the device application trigger request to a device to trigger the device (for example, an H2H device or an M2M device).

In an application scenario, the third sending module 740 is specifically configured to send a Paging request carrying the device application trigger request to the device to trigger the device; or send a Detach request carrying the device application trigger request to the device to trigger the device.

For example, the third sending module 740 may make the UE application trigger request be carried in a non Critical Extension field or another field of the Paging request, the device may correspondingly obtain the UE application trigger request from the non Critical Extension field or the another field of the Paging request, and the device may perform data exchange with an Application Server accordingly.

In an application scenario, the first sending module 720 is specifically configured to send a radio access bearer setup request carrying the device application trigger request to an access network element to make the access network element trigger the device; or, send a radio access bearer modification request carrying the device application trigger request to an access network element to make the access network element trigger the device; or, send a radio access bearer release request carrying the device application trigger request to an access network element to make the access network element trigger the device.

For example, the first sending module 720 may make the received UE application trigger request be carried in an evolved packet system-protocol data unit (EPS-PDU) or another field of a radio access bearer setup request, a radio access bearer modification request, or a radio access bearer release request, and after receiving the radio access bearer setup request, the radio access bearer modification request, or the radio access bearer release request, the access network element may obtain the UE application trigger request from the evolved packet system-protocol data unit (EPS-PDU) or the another field of the message.

In an application scenario, the second sending module 730 is specifically configured to send a Modify Bearer Request carrying the device application trigger request to a gateway network element to make the gateway network element trigger the device; or, send a Create Bearer Request carrying the device application trigger request to the gateway network element to make the gateway network element trigger the device.

For example, the second sending module 730 may make the UE application trigger request be carried in a Protocol Configuration Option field or another field of the Modify Bearer Request or the Create Bearer Request, and after receiving the Modify Bearer Request or the Create Bearer Request, the gateway network element may obtain the UE application trigger request from the Protocol Configuration Option field or the another field of the request message.

It should be understood that the mobility management network element 700 of this embodiment may be as the mobility management network element (for example, an MME) in the foregoing method embodiment, functions of functional modules thereof may be specifically implemented according to the method in the method embodiment, and for a specific implementation process thereof, reference may be made to the related description in the foregoing method embodiment, which is not repeated herein.

It can be seen from the above that, in this embodiment, after receiving the device application trigger request, the mobility management network element 700 delivers the device application trigger request to the device through an actively originated control plane request to trigger the device or delivers the device application trigger request to an access network element or a gateway network element through an actively originated control plane request, so as to enable the access network element or the gateway network element to deliver the device application trigger request to the corresponding device to trigger the device. The mechanism improves initiative and real-timeness of a network in delivering the device application trigger request, thereby triggering a device, such as an M2M device or an H2H device, in a more timely and efficient manner to exchange data with an application server.

Referring to FIG. 8, a gateway network element 800 according to an embodiment of the present invention may include: a second receiving module 810 and a fourth sending module 820.

The second receiving module 810 is configured to receive a request that is from a mobility management network element and carries a device application trigger request.

The fourth sending module 820 is configured to send a data packet (for example, a downlink data packet) carrying the device application trigger request to a device to trigger the device.

It should be understood that the gateway network element 800 of this embodiment may be as the gateway network element (for example, an eNodeB) in the foregoing method embodiment, functions of functional modules thereof may be specifically implemented according to the method in the method embodiment, and for a specific implementation process thereof, reference may be made to the related description in the foregoing method embodiment, which is not repeated herein.

It can be seen from the above that, in this embodiment, after receiving the device application trigger request, the mobility management network element delivers the device application trigger request to the gateway network element 800 through an actively originated control plane request, and the gateway network element 800 delivers the device application trigger request to the corresponding device to trigger the device. The mechanism improves initiative and real-timeness of a network in delivering the device application trigger request, thereby triggering a device, such as an M2M device or an H2H device, in a more timely and efficient manner to exchange data with an application server.

An embodiment of the present invention further provides a communication system, which includes:
a mobility management network element 700 or a gateway network element 800.

Referring to FIG. 9, another communication system according to an embodiment of the present invention includes: a mobility management network element 910 and a gateway network element 920.

The mobility management network element 910 is configured to receive a device application trigger request; and send a request carrying the device application trigger request to the gateway network element 920.

The gateway network element 920 is configured to receive the request that is from the mobility management network element 910 and carries the device application trigger request; and send a data packet carrying the device application trigger request to a device to trigger the device.

It should be understood that in this embodiment, the mobility management network element 910 may be as the mobility management network element 700, the gateway network element 920 may be as the gateway network element 800, functions of the mobility management network element 910 and the gateway network element 920 may be specifically implemented according to the method in the method embodiment, and for a specific implementation process thereof, reference may be made to the related description in the foregoing method embodiment, which is not repeated herein.

In the foregoing embodiments, description for each embodiment has its own emphasis, and a part without being described in detail in a certain embodiment can be obtained with reference to relevant description in other embodiments.

In conclusion, in the embodiment of the present invention, after receiving the device application trigger request, the mobility management network element delivers the device application trigger request to the device through an actively originated control plane request to trigger the device or delivers the device application trigger request to an access network element or a gateway network element through an actively originated control plane request, so as to enable the access network element or the gateway network element to deliver the device application trigger request to the corresponding device to trigger the device. The mechanism relatively improves initiative and real-timeness of a network in delivering the device application trigger request, thereby triggering a device, such as an M2M device or an H2H device, in a more timely and efficient manner to exchange data with an application server.

Persons of ordinary skill in the art may understand that all or a part of the steps of the methods in the embodiments may be implemented by a program instructing relevant hardware. The program may be stored in a computer readable storage medium. The storage medium may include a read-only memory, a random access memory, a magnetic disk, an optical disk, or the like.

The device triggering method and the network element device according to the embodiments of the present invention are described above in detail. The principle and implementation manner of the present invention are described herein through specific examples. The description about the embodiments is merely used for ease of understanding of the methods and core ideas of the present invention. In addition, persons of ordinary skill in the art may make modifications to specific implementation manners and application scopes according to the ideas of the present invention. In conclusion, the content of this specification shall not be construed as a limitation on the present invention.

## Claims

1. A device triggering method in a long term evolution, LTE, network, comprising:
receiving (110), from a home location server, by a mobility management network element, a device application trigger request for triggering a device to communicate with the home location server, wherein the device application trigger request comprises a device identifier; and
determining, by the mobility management network element, whether a device corresponding to the device identifier already detaches;
**characterized in that**:
if the result of the determination is no, sending (120b), by the mobility management network element, a request carrying the device application trigger request to an access network element to instruct the access network element to deliver the device application trigger request to the device, so as to trigger the device;
if the result of the determination is yes, sending, by the mobility management network element, a message indicating a failure in the triggering the device to the home location server.

2. The method according to claim 1, wherein the sending (120b) a request carrying the device application trigger request to an access network element comprises:
sending a radio access bearer setup request carrying the device application trigger request to the access network element to make the access network element trigger the device;
or,
sending a radio access bearer modification request carrying the device application trigger request to the access network element to make the access network element trigger the device;
or,
sending a radio access bearer release request carrying the device application trigger request to the access network element to make the access network element trigger the device.

3. The method according to claim 2, wherein the device application trigger request is carried in an evolved packet system-protocol data unit EPS-PDU of the radio access bearer setup request, the radio access bearer modification request, or the radio access bearer release request.

4. A mobility management network element (700) in a long term evolution, LTE, network, comprising:
a receiving module (710), configured to receive, from a home location server, a device application trigger request for triggering a device to communicate with the home location server;
a first sending module (720), configured to send a request carrying the device application trigger request to an access network element to make the access network element trigger a device, wherein the device application trigger request comprises a device identifier; and
the management network element is configured to perform the following:
receiving a device application trigger request; and
determining whether a device corresponding to the device identifier already detaches;
**characterized in that**:
if the result of the determination is no, sending a request carrying the device application trigger request to an access network element to instruct the access network element to deliver the device application trigger request to the device, so as to trigger the device;
if the result of the determination is yes, sending a message indicating a failure in the triggering the device to the home location server.

5. The mobility management network element (700) according to claim 4, wherein
the first sending module (710) comprises at least one of the following modules:
a first sending submodule, configured to send a radio access bearer setup request carrying the device application trigger request to the access network element to make the access network element trigger the device;
a second sending submodule, configured to send a radio access bearer modification request carrying the device application trigger request to the access network element to make the access network element trigger the device; and
a third sending submodule, configured to send a radio access bearer release request carrying the device application trigger request to the access network element to make the access network element trigger the device.

## Patentansprüche

1. Einrichtungsauslösungsverfahren in einem "Long Term Evolution"-, LTE-, Netz, umfassend:
Empfangen (110), von einem Heimatserver durch ein Mobilitätsverwaltungsnetzelement, einer Einrichtungsanwendungs-Auslösungsaufforderung zum Auslösen einer Einrichtung zum Kommunizieren mit dem Heimatserver, wobei die Einrichtungsanwendungs-Auslösungsaufforderung eine Einrichtungskennung umfasst, und
Bestimmen durch das Mobilitätsverwaltungsnetzelement, ob sich eine der Einrichtungskennung entsprechende Einrichtung bereits abmeldet,
**gekennzeichnet durch**:
falls das Ergebnis der Bestimmung Nein lautet, Senden (120b), durch das Mobilitätsverwaltungsnetzelement, einer die Einrichtungsanwendungs-Auslösungsaufforderung enthaltenden Aufforderung an ein Zugangsnetzelement, um das Zugangsnetzelement anzuweisen, die Einrichtungsanwendungs-Auslösungsaufforderung an die Einrichtung zu liefern, um die Einrichtung auszulösen,
falls das Ergebnis der Bestimmung Ja lautet, Senden einer eine fehlgeschlagene Auslösung der Einrichtung anzeigenden Mitteilung durch das Mobilitätsverwaltungsnetzelement an den Heimatserver.

2. Verfahren nach Anspruch 1, wobei das Senden (120b) einer die Einrichtungsanwendungs-Auslösungsaufforderung enthaltenden Aufforderung an ein Zugangsnetzelement Folgendes umfasst:
Senden einer die Einrichtungsanwendungs-Auslösungsaufforderung enthaltenden Funkzugangskanal-Einrichtungsaufforderung an das Zugangsnetzelement, um das Zugangsnetzelement zu veranlassen, die Einrichtung auszulösen,
oder
Senden einer die Einrichtungsanwendungs-Auslösungsaufforderung enthaltenden Funkzugangskanal-Modifizierungsaufforderung an das Zugangsnetzelement, um das Zugangsnetzelement zu veranlassen, die Einrichtung auszulösen,
oder
Senden einer die Einrichtungsanwendungs-Auslösungsaufforderung enthaltenden Funkzugangskanal-Freigabeaufforderung an das Zugangsnetzelement, um das Zugangsnetzelement zu veranlassen, die Einrichtung auszulösen.

3. Verfahren nach Anspruch 2, wobei die Einrichtungsanwendungs-Auslösungsaufforderung in einer "Evolved Packet System"-Protokolldateneinheit, EPS-PDU, der Funkzugangskanal-Einrichtungsaufforderung, der Funkzugangskanal-Modifizierungsaufforderung oder der Funkzugangskanal-Freigabeaufforderung enthalten ist.

4. Mobilitätsverwaltungsnetzelement (700) in einem "Long Term Evolution"-, LTE-, Netz, umfassend:
ein Empfangsmodul (710), das dafür konfiguriert ist, von einem Heimatserver eine Einrichtungsanwendungs-Auslösungsaufforderung zum Auslösen einer Einrichtung zum Kommunizieren mit dem Heimatserver zu empfangen,
ein erstes Sendemodul (720), das dafür konfiguriert ist, eine die Einrichtungsanwendungs-Auslösungsaufforderung enthaltende Aufforderung an ein Zugangsnetzelement zu senden, um das Zugangsnetzelement zu veranlassen, eine Einrichtung auszulösen, wobei die Einrichtungsanwendungs-Auslösungsaufforderung eine Einrichtungskennung umfasst, und
das Verwaltungsnetzelement dafür konfiguriert ist, Folgendes durchzuführen:
Empfangen einer Einrichtungsanwendungs-Auslösungsaufforderung und Bestimmen, ob sich eine der Einrichtungskennung entsprechende Einrichtung bereits abmeldet,
**gekennzeichnet durch**:
falls das Ergebnis der Bestimmung Nein lautet, Senden einer die Einrichtungsanwendungs-Auslösungsaufforderung enthaltenden Aufforderung an ein Zugangsnetzelement, um das Zugangsnetzelement anzuweisen, die Einrichtungsanwendungs-Auslösungsaufforderung an die Einrichtung zu liefern, um die Einrichtung auszulösen,
falls das Ergebnis der Bestimmung Ja lautet, Senden einer eine fehlgeschlagene Auslösung der Einrichtung anzeigenden Mitteilung an den Heimatserver.

5. Mobilitätsverwaltungsnetzelement (700) nach Anspruch 4, wobei
das erste Sendemodul (710) mindestens eines der folgenden Module umfasst:
ein erstes Sendeteilmodul, das dafür konfiguriert ist, eine die Einrichtungsanwendungs-Auslösungsaufforderung enthaltende Funkzugangskanal-Einrichtungsaufforderung an das Zugangsnetzelement zu senden, um das Zugangsnetzelement zu veranlassen, die Einrichtung auszulösen,
ein zweites Sendeteilmodul, das dafür konfiguriert ist, eine die Einrichtungsanwendungs-Auslösungsaufforderung enthaltende Funkzugangskanal-Modifizierungsaufforderung an das Zugangsnetzelement zu senden, um das Zugangsnetzelement zu veranlassen, die Einrichtung auszulösen, und
ein drittes Sendeteilmodul, das dafür konfiguriert ist, eine die Einrichtungsanwendungs-Auslösungsaufforderung enthaltende Funkzugangskanal-Freigabeaufforderung an das Zugangsnetzelement zu senden, um das Zugangsnetzelement zu veranlassen, die Einrichtung auszulösen.

## Revendications

1. Procédé de déclenchement de dispositif dans un réseau à évolution à long terme, LTE, comprenant les étapes consistant à :
recevoir (110), d'un serveur d'emplacement domestique, par un élément de réseau de gestion de mobilité, une demande de déclenchement d'application de dispositif servant à déclencher un dispositif pour le faire communiquer avec le serveur d'emplacement domestique, la demande de déclenchement d'application de dispositif contenant un identifiant de dispositif ; et
déterminer, par l'élément de réseau de gestion de mobilité, si un dispositif correspondant à l'identifiant de dispositif est déjà en train de se détacher ;
**caractérisé par** les étapes consistant à :
si le résultat de la détermination est non, envoyer (120b), par l'élément de réseau de gestion de mobilité, une demande contenant la demande de déclenchement d'application de dispositif à un élément de réseau d'accès pour ordonner à l'élément de réseau d'accès de fournir la demande de déclenchement d'application de dispositif au dispositif, afin de déclencher le dispositif ;
si le résultat de la détermination est oui, envoyer, par l'élément de réseau de gestion de mobilité, un message indiquant un échec du déclenchement du dispositif au serveur d'emplacement domestique.

2. Procédé selon la revendication 1, dans lequel l'étape consistant à envoyer (120b) une demande contenant la demande de déclenchement d'application de dispositif à un élément de réseau d'accès comprend l'étape consistant à :
envoyer une demande d'établissement de support d'accès radio contenant la demande de déclenchement d'application de dispositif à l'élément de réseau d'accès pour faire en sorte que l'élément de réseau d'accès déclenche le dispositif ;
ou,
envoyer une demande de modification de support d'accès radio contenant la demande de déclenchement d'application de dispositif à l'élément de réseau d'accès pour faire en sorte que l'élément de réseau d'accès déclenche le dispositif ;
ou,
envoyer une demande de libération de support d'accès radio contenant la demande de déclenchement d'application de dispositif à l'élément de réseau d'accès pour faire en sorte que l'élément de réseau d'accès déclenche le dispositif.

3. Procédé selon la revendication 2, dans lequel la demande de déclenchement d'application de dispositif est contenue dans une unité de données de protocole de système de paquets évolué, EPS-PDU, de la demande d'établissement de support d'accès radio, de la demande de modification de support d'accès radio ou de la demande de libération de support d'accès radio.

4. Élément de réseau de gestion de mobilité (700) d'un réseau à évolution à long terme, LTE, comprenant :
un module de réception (710), conçu pour recevoir, d'un serveur d'emplacement domestique, une demande de déclenchement d'application de dispositif servant à déclencher un dispositif pour le faire communiquer avec le serveur d'emplacement domestique ;
un premier module d'envoi (720), conçu pour envoyer une demande contenant la demande de déclenchement d'application de dispositif à un élément de réseau d'accès pour faire en sorte que l'élément de réseau d'accès déclenche un dispositif, la demande de déclenchement d'application de dispositif contenant un identifiant de dispositif ; et
l'élément de réseau de gestion étant conçu pour effectuer les étapes consistant à :
recevoir une demande de déclenchement d'application de dispositif ; et
déterminer si un dispositif correspondant à l'identifiant de dispositif est déjà en train de se détacher ;
**caractérisé par** les étapes consistant à :
si le résultat de la détermination est non, envoyer une demande contenant la demande de déclenchement d'application de dispositif à un élément de réseau d'accès pour ordonner à l'élément de réseau d'accès de fournir la demande de déclenchement d'application de dispositif au dispositif, afin de déclencher le dispositif ;
si le résultat de la détermination est oui, envoyer un message indiquant un échec du déclenchement du dispositif au serveur d'emplacement domestique.

5. Élément de réseau de gestion de mobilité (700) selon la revendication 4, dans lequel :
le premier module d'envoi (710) comprend au moins un des modules suivants :
un premier sous-module d'envoi, conçu pour envoyer une demande d'établissement de support d'accès radio contenant la demande de déclenchement d'application de dispositif à l'élément de réseau d'accès pour faire en sorte que l'élément de réseau d'accès déclenche le dispositif ;
un deuxième sous-module d'envoi, conçu pour envoyer une demande de modification de support d'accès radio contenant la demande de déclenchement d'application de dispositif à l'élément de réseau d'accès pour faire en sorte que l'élément de réseau d'accès déclenche le dispositif ; et
un troisième sous-module d'envoi, conçu pour envoyer une demande de libération de support d'accès radio contenant la demande de déclenchement d'application de dispositif à l'élément de réseau d'accès pour faire en sorte que l'élément de réseau d'accès déclenche le dispositif.
